# EUROPÄISCHE PATENTANMELDUNG

(11) **EP 1 712 824 A2**
(43) Veröffentlichungstag der Anmeldung: **18.10.2006**
(21) Anmeldenummer: 06006897.0
(22) Anmeldetag: 31.03.2006
(51) Int. Cl.: F16L 11/12, F16L 21/08

(54) **Leitung, vorzugsweise flexibler Schlauch**

(30) Priorität: 14.04.2005 DE 102005017319
(71) Anmelder: VERITAS AG, 63571 Gelnhausen (DE)
(72) Erfinder: Haschka, Karl, 63584 Gründau (DE); Rösch, Thomas, 63589 Linsengericht-Grossenhausen (DE)
(74) Vertreter: Grünecker, Kinkeldey, Stockmair & Schwanhäusser Anwaltssozietät

(57) **Zusammenfassung**

Die Erfindung betrifft eine Leitung (1), vorzugsweise einen flexiblen Schlauch, bei der diese in einem Endbereich zumindest abschnittsweise eine Umstülpung aufweist, so dass die ursprüngliche Leitungsaußenwand (9) des nicht-umgestülpten Abschnitts (12) und des umgestülpten Abschnitts (11) einander zugewandt sind.

## Beschreibung

Die Erfindung bezieht sich auf eine Leitung, vorzugsweise auf einen flexiblen Schlauch, gemäß dem Oberbegriff von Anspruch 1.

Derartige Leitungen sind aus dem Stand der Technik in vielfältigen Ausführungsformen bekannt und werden z.B. in Haustechnik, Maschinenbau und im Automobilbau verwendet. Vorzugsweise werden diese Leitungen für flexible Verbindungen eingesetzt und sind als flexible Schläuche ausgeführt. Sie verbinden dabei in der Regel verschiedene Bauteile miteinander und dienen bevorzugt dem Transport von Flüssigkeiten oder Gasen.

Dabei stellen die Verbindungen eines solchen Schlauches mit einem anderen Bauteil häufig ein kritisches Element dar. Verbreitet finden zur Verbindung von Schläuchen mit anderen Bauteilen Schlauchaufstecknippel mit Schlauchschellen Verwendung. Diese Verbindungsart hat jedoch eine Reihe von Nachteilen, wie umständliche Montage, Gefahr von Lockerung und Abrutschen der Schlauchschelle, Kerbwirkung an Aufstecknippel und Schlauchschelle, mangelnde Zugsicherheit und Scheuerbeständigkeit, Probleme bei thermischer Belastung der Verbindung, Notwendigkeit regelmäßiger Demontage und Kontrolle, Lumenverengung durch den innerhalb des Durchflussquerschnitts liegenden Schlauchaufstecknippel.

Der Erfindung liegt deshalb die Aufgabe zugrunde, eine Leitung, insbesondere einen flexiblen Schlauch anzugeben, der zuverlässig mit anderen Bauteilen verbindbar ist.

Die Aufgabe wird erfindungsgemäß gelöst durch eine Leitung, vorzugsweise einen flexiblen Schlauch, der in einem Endbereich, zumindest abschnittsweise, eine Umstülpung aufweist, so dass die ursprüngliche Leitungsaußenwand des nicht-umgestülpten Abschnitts und des umgestülpten Abschnitts einander zugewandt sind.

Ein Vorteil der vorliegenden Erfindung besteht darin, dass die Leitung im Umstülpungsbereich stabilisiert ist und verschiedene Dichtflächen, insbesondere in dessen Stirn- und Außenbereich, ausbildet. Ein weiterer Vorzug der erfindungsgemäßen Leitung besteht darin, dass durch die Umstülpung nach außen die Leitungsinnenwand nach außen gekehrt wird, wodurch die Leitungsinnenseite die Dichtung zu einem angrenzenden Bauteil wie z.B. einem Leitungsanschlussstück ausbilden kann. Vorteilhaft ist ebenfalls, dass die Leitung durch die Umstülpung einen Greifrand ausbildet, der von außen hintergriffen, untergriffen oder umgriffen werden kann. Ein weiterer wichtiger Pluspunkt ist, dass die erfindungsgemäße Leitung an einem entsprechenden Leitungsanschlussstück einfach montierbar ist und eine zuverlässige Verbindung herstellen kann. Weiterhin günstig wirkt sich aus, dass eine Verbindung der erfindungsgemäßen Leitung mit einem entsprechenden Anschlussstück keine Lumenverengung im Durchströmungsquerschnitt aufweist. Ebenfalls ein wichtiger Vorzug des Erfindungsgegenstandes ist, dass die Verbindung der erfindungsgemäßen Leitung mit einem entsprechenden Leitungsanschlussstück besonders zuverlässig ausführbar und im Dauereinsatz verlässlich ist. Ein zusätzlicher Vorteil der erfindungsgemäßen Leitung besteht darin, dass diese einfach und kostengünstig herstellbar ist.

In einer bevorzugten Ausführungsform der erfindungsgemäßen Leitung kann ein Abschnitt der Umstülpung die Leitung an einem nicht-umgestülpten Abschnitt berühren, wodurch eine Abstützung und Stabilisierung des Umstülpungsbereiches stattfindet.

In einer anderen Ausgestaltung der Erfindung kann der umgestülpte Abschnitt nach dem Umstülpen nur in einem das Leitungsende umfassenden Abschnitt den nicht-umgestülpten Abschnitt der Leitung berühren, wodurch insbesondere der hintere Rand der Umstülpung besonders stabilisiert wird und zur Montage in einem Leitungsanschlussstück geeignet ist, wobei der Restbereich der Umstülpung flexibel gehalten werden kann.

In einer weiteren Ausgestaltung kann die Umstülpung so ausgeformt sein, dass ein leitungsendseitiger Abschnitt eines umgestülpten Abschnitts in einem geraden Abschnitt endet, wodurch eine leitungsparallel gegen das Leitungsende gerichtete Kraft besser zum Krümmungsbereich der Umstülpung weitergeleitet wird.

Gemäß einem weiteren bevorzugten Ausführungsbeispiel kann die Umstülpung so vorgenommen werden, dass ein leitungsendseitiger Umstülpungsbereich in einem Parallelabschnitt endet, wobei dieser Parallelabschnitt so beschaffen ist, dass die jeweiligen Wandungslagen eines nicht-umgestülpten Abschnitts und eines umgestülpten Abschnitts in diesem Bereich in etwa parallel zueinander angeordnet sind. In diesem Ausführungsbeispiel findet eine großflächigere Stabilisierung des Umstülpungsbereichs statt. Außerdem ist der hintere Rand des Umstülpungsbereichs besser zum Einleiten einer axial gegen das Anschlussstück gerichteten Andruckkraft geeignet.

Nach einem weiteren Ausführungsbeispiel kann der umgestülpte Abschnitt den nicht-umgestülpten Abschnitt nicht berühren, wodurch der umgestülpte Abschnitt besonders flexibel gehalten werden kann und Vorrichtungen in den zwischen umgestülptem Abschnitt und weiterführendem Bereich der Leitung ausgebildeten Ringspalt einschiebbar sind.

In einer anderen Ausführungsform kann die Umstülpung eines Leitungsendes mehrfach erfolgen, wobei mehr als zwei Wandungslagen im Umstülpungsbereich aneinandergrenzen, wodurch eine besonders starke Stabilisierung und Aufdickung des Endbereichs gewährleistet werden kann.

In einer weiteren besonderen Ausführungsform kann die Umstülpung durch Einrollen des Leitungsendes vorgenommen werden, wobei die Wandungslagen im Umstülpungsbereich im Querschnitt in etwa schneckenförmig angeordnet sind, wodurch eine besonders ausgeprägte Ausrundung und Radialstabilisierung des Umstülpungsbereiches erzielbar ist.

In einer bevorzugter Ausführungsweise kann die Leitung im Umstülpungsbereich wenigstens ein Stabilisierungsmittel enthalten, mit dem die Umstülpung stabilisierbar ist. Hierdurch kann die Umstülpung in besonderer Weise stabilisiert und für den jeweiligen Einsatzzweck optimiert werden.

In einer vorteilhaften Weiterbildung kann die erfindungsgemäße Leitung ein flexibler Schlauch sein und zumindest ein Elastomer, ein thermoplastisches Elastomer oder einen Thermoplasten enthalten. Durch die Verwendung eines solchen Schlauches kann die Leitungsverbindung flexibel gehalten werden und auch der Umstülpungsbereich eine besonders zuverlässige Dichtung zu einem angrenzenden Bauteil wie einem Leitungsanschlussstück herstellen.

In einer bevorzugten Ausführungsform kann dieser flexible Schlauch als mehrlagiger Gewebeschlauch ausgebildet sein und mindestens aus einer Innenschicht, einer Armierungsschicht und einer Außenschicht bestehen, wobei Innen- und/oder Außenschicht ein Elastomer, ein thermoplastisches Elastomer oder einen Thermoplasten enthalten. Durch den Einsatz eines so aufgebauten Gewebeschlauchs hält dieser höheren Belastungen stand.

In einer vorteilhaften Weiterbildung kann der flexible Schlauch eine Sperrschicht enthalten, wodurch dem Schlauch besondere Einsatzmöglichkeiten verleihbar sind, indem der Diffusionswiderstand für Chemikalien erhöht wird und so z.B. die mechanisch tragenden Schichten des Schlauchs vor aggressiven Chemikalien geschützt werden können oder der Austritt dieser Chemikalien in die Umwelt unterbunden werden kann.

Nach einer besonderen Weiterbildung ist diese Sperrschicht schlauchinnenseitig angebracht, wodurch der Diffusionswiderstand für im Schlauchinneren transportierte aggressive Chemikalien erhöht wird und so z.B. die mechanisch tragenden Schichten des Schlauchs vor diesen Chemikalien geschützt werden können und eine besonders zuverlässige Abdichtung des Schlauches zu einem Anschlussstück über die mit diesem in Kontakt befindlichen Sperrschicht erzielbar ist.

Als besonders vorteilhaft kann sich hierbei eine Sperrschicht erweisen, die ein Kautschukcopolymer oder einen Halogen enthaltenden Kautschuk, bevorzugt Fluorkautschuk, enthält. Eine so ausgestattete Sperrschicht weist u.a. eine besonders hohe Chemikalienresistenz, beispielsweise gegen eine Vielzahl von Kohlenwasserstoffverbindungen auf.

In einer bevorzugten Ausführungsform kann die Leitung im Umstülpungsbereich einen Dichtbereich ausbilden, der ein Dichtmittel enthält, wodurch dieser Bereich besonders geeignet zur Ausführung einer Dichtungsfunktion ausgebildet werden kann.

Vorteilhafterweise kann dieses Dichtmittel eine Dichtlippe darstellen, die in einer bevorzugten Ausführungsform durch Einschneiden der Leitungswand nach dem Vulkanisieren bzw. Polymerisieren gebildet werden kann.

Gemäß einer bevorzugten Ausführungsform kann das bevorzugte Verhältnis der Länge des Umstülpungsbereichs zur Wandstärke der Leitung zwischen 2,5:1 und 20:1 betragen, wodurch sich Abmessungsverhältnisse ergeben, die sich zur Erzielung einer guten Stabilisierungswirkung der Umstülpung geeignet sind.

Ferner kann die Leitung in einer weiteren bevorzugten Form als Adapter ausgeführt sein, wobei die Leitung beidendig eine Umstülpung aufweist. Hierdurch kann die Leitung eine Verbindung zwischen zwei angrenzenden Bauteilen herstellen und diese miteinander verbinden.

In einer bevorzugten Ausführungsform kann der Adapter so ausgeführt sein, dass das Verhältnis aus Adapterlänge und Leitungsinnendurchmesser typischerweise kleiner 10:1, bevorzugt kleiner 3:1 ist. Derartige Adapter können vorteilhaft eingesetzt werden zur mechanischen, thermischen oder elektrischen Entkopplung von Bauteilen, zur Dämpfung der Schwingungsübertragung von einem Bauteil auf ein anderes Bauteil, zur akustischen Entkopplung, als dämpfendes Element zur Aufnahme von Druckspitzen eines durch den Adapter transportierten Mediums, zum Ausgleich von Toleranzen und thermischen Spannungen eingesetzt werden. Besonders vorteilhaft ist ein derartiger Adapter bei Fördervorrichtungen wie Pumpen und Kompressoren für Flüssigkeiten und Gase, in pneumatischen und hydraulischen Vorrichtungen und insbesondere als Ladeluftzuführung für Kfz-Motoren mit Turboladern oder anderen ansaugluftkomprimierenden Vorrichtungen einsetzbar.

In einer speziellen Ausgestaltung kann dieser Adapter so beschaffen sein, dass der Durchmesser der Leitung an einem Adapterende größer ist als an dem Adapterende. Hierdurch kann eine Durchmesser- oder Querschnittflächenanpassung im Falle von Querschnittsunterschieden zwischen Eintritts- und Austrittsöffnung vorgenommen und so eine strömungsgünstige Anpassungsverbindung zwischen den zu verbindenden Anschlüssen geschaffen werden.

In einer vorteilhaften Weiterbildung kann die erfindungsgemäße Leitung mit einem Anschlussstück verbunden sein, das eine oder mehrere Anlageflächen aufweist, mit denen die Leitung einen abdichtenden Kontakt ausbilden kann. Hierdurch kann eine Verbindung der Leitung mit einem weiteren Bauteil hergestellt werden.

In unterschiedlichen Ausführungsformen kann dieses Anschlussstück Anlageflächen ausbilden, wobei der Umstülpungsbereich der Leitung mit einer korrespondierenden Innenanlagefläche und/oder stirnseitigen Anlagefläche und/oder Außenanlagefläche und/oder einer geneigten Anlagefläche und/oder einer gewölbten Anlagefläche des Anschlussstücks in Anlage bringbar ist. Durch diese Ausführungsformen ist es möglich, die Verbindung zwischen Leitung und Anschlussstück optimal an die jeweiligen Einsatzerfordernisse und an die Ausführungsform der Umstülpung anzupassen.

Vorteilhafterweise kann das Anschlussstück mit der Leitung zumindest im stirnseitigen und/oder außenseitigen und/oder einem dazwischenliegenden Bereich des Umstülpungsbereichs eine Abdichtung ausbilden, wodurch sich besonders vorteilhafte Anlageflächen für die Umstülpung ergeben und keine Kontaktflächen des Leitungsanschlussstücks innerhalb des Leitungsquerschnitts angeordnet sind. Hierdurch ist eine besonders zuverlässige Verbindung bei gleichzeitig minimaler Beeinträchtigung des Volumenstroms eines hindurchgeleiteten Mediums gewährleistbar.

In einer weiteren Ausführungsform kann die Verbindung zwischen dem Umstülpungsbereich der Leitung und dem Anschlussstück kraftschlüssig und/oder formschlüssig erfolgen, wodurch eine Haltekraft erzeugbar ist, die ein unbeabsichtigtes Herausziehen der umgestülpten Leitung aus dem Anschlussstück erschwert oder verhindert.

In einer vorteilhaften Weiterbildung kann das Anschlussstück mit wenigstens einem Haltemittel ausgestattet sein, das den Umstülpungsendbereich der umgestülpten Leitung hintergreift. Dieses Haltemittel kann dabei je nach technischen Erfordernissen unterschiedlich ausgestaltet sein. Dabei kann das Haltemittel beispielsweise als Sprengring, als Federdrahtklammer, als Schraubring, Rastring, Klebring oder Bajonettring, als Schraubhülse, Rasthülse, Klebehülse oder Bajonetthülse, als segmentierte Haltevorrichtung, die nachträglich an die Leitung angelegt werden kann, mittels auf- oder einsteckbarer Halteklammern, mittels Klemmschrauben oder Fixierungsschrauben oder entsprechender Nieten, mittels eines schwenkbaren Haltebügels, mittels beweglicher Halteklauen oder mittels mit dem Anschlussstück verbundener Rastnasen, Federlaschen, Presslaschen oder Presshülsen erfolgen. Mittels dieser Haltemittel kann eine optimale und an den jeweiligen Einsatzzweck bestmöglich angepasste Verbindung des umgestülpten Schlauchs mit dem Anschlussstück hergestellt werden.

In einer besonders vorteilhaften Weiterbildung kann dieses Haltemittel zusätzlich eine Andruckfunktion ausüben und die Leitung axial in Einschubrichtung gegen eine Anlagefläche des Anschlussstückes drücken. Hierbei wird ein besonders zuverlässiger abdichtender Kontakt zwischen der Umstülpung und einer stirnseitigen Anlagefläche des Anschlussstücks herstellbar.

In einer weiteren Ausführungsform können Leitung und Anschlussstück durch eine stoffschlüssige Verbindung zwischen dem Anschlussstück und der Leitung verbunden werden, wobei diese stoffschlüssige Verbindung, insbesondere durch Verkleben oder Verschweißen des Leitungsmaterials, mit dem Anschlussstück erfolgen kann. Hierdurch kann eine besonders dauerhafte und unlösbare Verbindung zwischen Leitung und Anschlussstück hergestellt werden.

Die vorstehend aufgeführten Ausgestaltungen der Erfindung stellen lediglich eine Auswahl zweckmäßiger Gestaltungsmöglichkeiten des Erfindungsgegenstandes dar. Eine sinnvolle Kombination der zuvor dargelegten Ausführungsbeispiele ergibt sich aus den entsprechenden Rückbezügen der abhängigen Ansprüche.

Nachfolgend wird die Erfindung beispielhaft anhand einer Auswahl bevorzugter Ausführungsbeispielen in Verbindung mit den dazugehörigen Figuren näher erläutert. Es zeigen:
- Fig. 1: einen schematischen Querschnitt durch einen umgestülpten Bereich einer Leitungswand,
- Fig. 2: einen schematischen Querschnitt durch eine Wand eines umgestülpten mehrlagigen Gewebeschlauchs mit Stabilisierungsmittel,
- Fig. 3: einen schematischen Querschnitt durch die Wand eines umgestülpten mehrlagigen Gewebeschlauchs mit ausgebildeten Dichtlippen,
- Fig. 4: eine schematische Darstellung eines Medianschnitts in einer Axialebene durch einen Adapter mit einer Leitung mit beidendiger Umstülpung,
- Fig. 5a: eine schematische Darstellung eines Medianschnitts in einer Axialebene durch eine umgestülpte Leitung mit einem Leitungsanschlussstück, das eine Federdrahtklammer aufweist,
- Fig. 5b: eine schematische Darstellung eines Medianschnitts in einer Axialebene durch eine umgestülpte Leitung mit einem Leitungsanschlussstück, das einen Bajonettring aufweist.

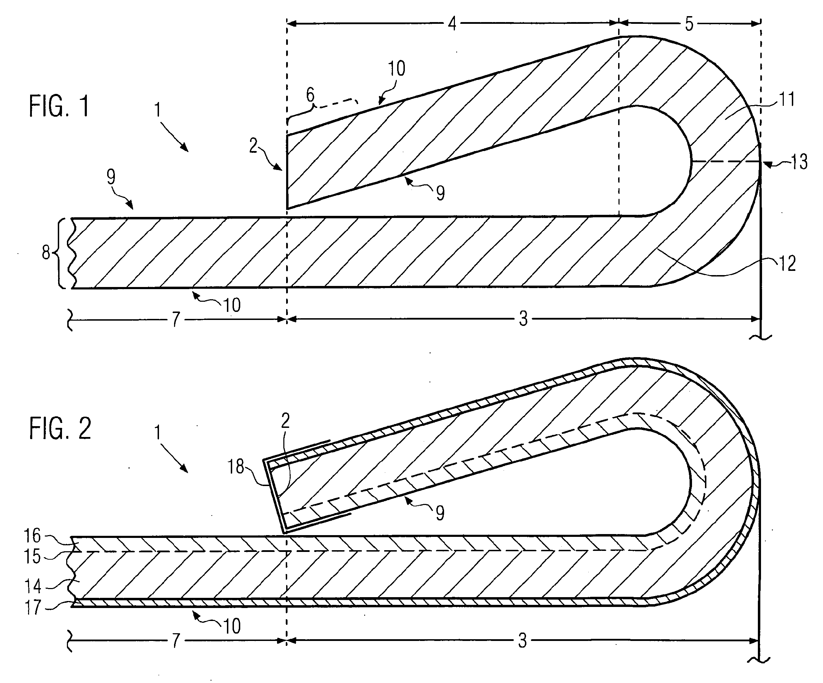

Fig. 1 zeigt einen schematischen Querschnitt durch die Wand einer Leitung 1 im Umstülpungsbereich 3 eines ersten Ausführungsbeispiel der Erfindung, wobei auf die Darstellung der gegenüberliegenden Leitungswand der rotationssymmetrischen Leitung verzichtet wurde, da sie der achsengespiegelten Ansicht des dargestellten Abschnitts entspricht.

In Fig. 1 ist eine Leitung 1 zu erkennen, die eine Leitungsaußenwand 9 und eine Leitungsinnenwand 10 aufweist. In einem dargestellten Umstülpungsbereich 3 wurde die Leitung 1 einer Umstülpung nach außen unterzogen, die dazu führt, dass sich die Orientierung der Leitungsaußenwand 9 und der Leitungsinnenwand 10 in einem umgestülpten Abschnitt 11 in Bezug auf eine imaginäre Leitungsmittellinie oder Leitungsachse, die die Rotationsachse der rotationssymmetrischen Leitung 1 darstellt, in Bezug auf einen nicht-umgestülpten Abschnitt 12 umkehren, wodurch die ursprünglichen Leitungsaußenwände 9 von umgestülptem Abschnitt 11 und nicht-umgestülptem Abschnitt 12 einander zugewandt sind.

Der Umstülpungsbereich 3 erstreckt sich dabei von einem distalen Ende 13 des Umstülpungsbereichs 3 der umgestülpten Leitung 1 in Richtung proximal bis zu einer imaginären Linie, die die jeweils proximalsten Punkte des umgestülpten Abschnitts 11 einer Leitungswandseite mit dem entsprechenden Punkt der gegenüberliegenden Leitungswandseite verbindet und den umgestülpten Abschnitt 11 und den nicht-umgestülpten Abschnitt 12 umfasst. Ferner umfasst die Leitung 1 im proximalen Anschluss an den Umstülpungsbereich 3 einen weiterführenden Bereich 7.

Der Umstülpungsbereich 3 enthält ferner ein Leitungsende 2, einen Umstülpungsendbereich 6 und einen Krümmungsbereich 5. Ferner kann in einer bevorzugten Ausführungsform der umgestülpte Abschnitt 11 ferner einen geraden Abschnitt 4 umfassen. Als Leitungsende 2 ist die Schnittkante der Leitung im umgestülpten Abschnitt 11 bezeichnet. Der Umstülpungsendbereich 6 besteht aus einem an dieses Leitungsende 2 angrenzenden Teilabschnitt des umgestülpten Abschnitts 11. Krümmungsbereich 5 bezeichnet einen Teilabschnitt des Umstülpungsbereichs 3 der das distale Ende 13 des Umstülpungsbereichs 3 umfasst und dadurch bestimmt ist, dass die Leitungswand im Querschnitt eine starke Krümmung aufweist. Der im umgestülpten Abschnitt 11 daran angrenzende gerade Abschnitt 4 umfasst den verbleibenden Teilabschnitt des umgestülpten Abschnitts 11 des Umstülpungsbereichs 3, in dem die Leitungswand im Querschnitt in etwa gerade verläuft. Die Leitung 1 weist ferner eine Wandstärke 8 auf, die im weiterführenden Bereich 7 zu bestimmen ist.

Zum vorgenannten ersten Ausführungsbeispiel sind weitere Varianten möglich und sinnvoll, deren wichtigste exemplarisch im Folgenden mit kurzen Erläuterungen dargestellt sind:

In einer Variante des ersten Ausführungsbeispiels ist die Umstülpung 3 so ausgeführt, dass der umgestülpte Bereich 11 abschnittsweise am nicht-umgestülpten Abschnitt 12 anliegt und diesen berührt. Dadurch ergibt sich eine vorteilhafte gegenseitige Stabilisierung von umgestülptem 11 und nicht-umgestülptem 12 Abschnitt, die insbesondere ein radiales Ausweichen des umgestülpten Abschnitts 11 bei axialer Druckausübung auf das Leitungsende 2 verhindert.

In einer anderen Variante ist die Umstülpung mit einem gegen Null gehenden Innenkrümmungsradius ausgeführt, wodurch der umgestülpte Abschnitt 11 nahezu über seine gesamte Länge am nicht-umgestülpten Abschnitt 12 anliegt. Alternativ dazu kann Umstülpungsbereich 3 aber auch mit einem größeren Innenkrümmungsradius ausgeführt sein, wodurch im Krümmungsinnenbereich ein Hohlraum entsteht, in den z.B. auch ein anderes Bauteil einbringbar oder in Eingriff befindlich sein kann. Diese Bauform kann beispielsweise auch zur Anwendung kommen, wenn ein stärkeres Umformen der Schlauchwand und/oder ein übermäßiges Stauchen der im Krümmungsinnenbereich liegenden Schlauchschicht und/oder zu starke Dehnung der im Krümmungsaußenbereich liegenden Schlauchschicht vermieden werden soll. Als weiterer Vorteil resultiert eine stärkere Elastizität des Krümmungsbereichs 5, wodurch die Leitung im Krümmungsbereich 5 anpassungsfähigere Dichtflächen zu einem benachbarten Bauteil ausbilden kann. Auch kann diese Variante so ausgeführt sein, dass das Leitungsende 2 am nicht-umgestülpten Abschnitt 12 anliegt und berührt.

Als weitere Ausgestaltungsmöglichkeit des vorgenannten Ausführungsbeispiels kann der leitungsendseitige Abschnitt eines umgestülpten Abschnitts 11 in einem geraden Abschnitt 4 enden, wodurch eine bessere Übertragung einer auf das Leitungsende 2 wandparallel ausgeübten und an den Krümmungsbereich 5 weitergeleiteten Andruckkraft stattfindet, und den im Krümmungsbereich 5 stirnflächigen Bereich der Umstülpung gegen eine Andruckfläche eines angrenzenden Bauteils andrückt.

Dieser gerade Abschnitt 4 kann auch als Parallelabschnitt ausgeführt sein, wobei die jeweiligen Wandungslagen eines nicht-umgestülpten Abschnitts 12 und eines umgestülpten Abschnitts 11 in diesem Bereich in etwa parallel zueinander angeordnet sind, wodurch dieser Parallelabschnitts eine parallele Orientierung in Bezug auf die zuvor erwähnte Andruckkraft aufweist. Fallweise kann eine Ausgestaltung günstig sein, bei der der umgestülpte Abschnitt 11 nicht am nicht-umgestülpten Abschnitt 12 anliegt, so dass zwischen Leitungsende und nicht-umgestülptem Abschnitt ein umlaufender Ringspalt entsteht, wodurch z.B. ein oder mehrere Elemente in diesen Spalt einführbar oder anbringbar sind oder in Eingriff gebracht werden können.

Die Umstülpung ist nicht auf eine einfache Umstülpung beschränkt, sondern kann ebenso mehr als einmal ausgeführt sein, wodurch mehr als zwei Wandungslagen im Umstülpungsbereich 3 aneinandergrenzen. Durch eine solche Ausführung wird eine zusätzliche Stabilisierung des Umstülpungsbereichs 3 und eine stärkere Aufdickung desselben erzielt. Ebenso ist eine Weiterentwicklung der vorgenannten Ausführungsform denkbar, bei der das Leitungsende 2 durch Einrollen umgestülpt wird, wodurch die Wandungslagen im Umstülpungsbereich 3 im Querschnitt in etwa schneckenförmig angeordnet sind. Hierdurch lässt sich eine besonders elastische Ausbildung der Aufdickung in Form eines Rundwulstes herstellen. Ebenso wäre es denkbar, den Umstülpungsbereich zumindest in Teilbereichen oder Abschnitten zu dehnen, zu stauchen oder zu quetschen oder in anderer Weise umzuformen oder zusätzlich Material aufzutragen oder abzutragen um dessen Eigenschaften weiter zu beeinflussen.

Insbesondere kommen für Ausgestaltungen der Erfindung als Materialien für eine solche Leitung 1 Kunststoffe aller Art, wie Duroplaste, Thermoplaste, thermoplastische Elastomere, Elastomere, Copolymere und Verbundwerkstoffe in Betracht. Je nach Einsatzgebiete können Ausführungsbeispiele der Leitung 1 einschichtig oder mehrschichtig aufgebaut sein.

Die Ausführung der erfindungsgemäßen Leitung 1 ist dabei nicht auf runde Querschnitte beschränkt; insbesondere sind Ausgestaltungen mit ovalem Querschnitt oder Kastenquerschnitt oder weitere Querschnittsformen denkbar; für besondere Einsatzzwecke können auch wechselnde Querschnitte zum Einsatz kommen. Ebenso müssen die Leitungen 1 keine geraden Leitungen 1 sein, sondern können im weiterführenden Bereich 7 Biegungen oder sogar eine beliebige Formgebung aufweisen. Die Leitungen 1 können in bestimmten Ausführungsformen der Erfindung ferner nicht nur hinsichtlich der Formgebung sondern auch hinsichtlich der Materialzusammensetzung oder Aufbringung von Zusatzschichten abschnittsweise unterschiedlich sein.

Ferner können alle zuvor aufgeführten Umstülpungsvarianten auch beidendig auf ein Leitungsstück angewendet werden.

Häufig wird es erwünscht sein, die Leitung 1 flexibel gestaltet und als flexiblen Schlauch auszuführen, wobei eine derartige Leitung in der Regel wenigstens ein Elastomer oder ein thermoplastisches Elastomer oder einen Thermoplasten, enthält und bevorzugt in einem Extrusionsverfahren gefertigt wird. In vielen Fällen kann es vorteilhaft sein, die Umstülpung vor einem Vulkanisieren bzw. Polymerisieren vorzunehmen, um den Umstülpungsbereich hierdurch in seiner Formgebung zu stabilisieren. In anderen Fällen kann auf jegliche Art der Stabilisierung verzichtet werden oder die Stabilisierung durch andere Maßnahmen, wie Verkleben oder Verschweißen oder durch zusätzliche mechanische Stabilisierungsmittel oder im Einbauzustand in einem Anschlussstück durch geeignete Ausgestaltung eines Anschlussbereiches dieses Anschlussstücks hergestellt werden.

Fig. 2 zeigt einen entsprechenden Querschnitt durch die Wand einer Leitung - hier ausgeführt als flexibler Schlauch - im Umstülpungsbereich 3 nach einem zweiten Ausführungsbeispiel der Erfindung. Dieses zweite Ausführungsbeispiel entspricht in wesentlichen Punkten dem ersten Ausführungsbeispiel, so dass Bezugszeichen sowie Aussagen zum ersten Ausführungsbeispiel auch für das zweite Ausführungsbeispiel zutreffen. Um Wiederholungen zu vermeiden, wird deshalb nur auf Unterschiede und Besonderheiten dieses zweiten Ausführungsbeispiels eingegangen.

Zusätzlich zum ersten zeigt das zweite Ausführungsbeispiel am Leitungsende 2 des flexiblen Schlauches ein Stabilisierungsmittel 18. Außerdem ist die Leitung als flexibler Schlauch ausgeführt und weist einen vierschichtigen Aufbau mit folgender Schichtabfolge vom Schlauchinneren zum Schlauchäußeren auf: Sperrschicht 17, Innenschicht 14, Armierungsschicht 15, Außenschicht 16.

Zu dieser zweiten Ausführungsform als flexibler Schlauch sind wiederum mehrere Varianten sinnvoll, die nachfolgend exemplarisch beschrieben sind. Die Leitung kann aus einem einlagigen Schlauch 1 aus Thermoplasten, thermoplastischen Elastomeren oder Elastomeren bestehen, wodurch diese Schläuche 1 besonders kostengünstig in der Produktion und in der nachfolgenden Umstülpungsbearbeitung sind. Um insbesondere die mechanischen Eigenschaften eines flexiblen Schlauches 1 im jeweiligen Einsatzbereich zu verbessern, kann es zweckmäßig sein, auf eine mehrlagige Ausführung eines Schlauches zurückzugreifen, wobei auch mehrere Schichten 14, 16, 17 unterschiedlicher Kunststoffe zum Einsatz kommen können, oder/und der Schlauch eine Armierungsschicht 15, beispielsweise aus einem Gewebe mit zugbeständigen Fasern enthält.

In einer weiterentwickelten Variante kann der flexibler Schlauch 1 auch bevorzugt schlauchinnenseitig und/oder schlauchaußenseitig eine Sperrschicht 17 aufweisen, wofür u.a. Elastomercopolymere, bevorzugt Kautschukcopolymere oder ein Halogen enthaltender Kautschuk, bevorzugt Fluorkautschuk in Betracht kommen, um diesem flexiblen Schlauch 1 eine besondere Resistenz gegen bestimmte Chemikalien zu verleihen, deren Diffusion zu verringern, und/oder die mechanische oder thermische Beständigkeit zu erhöhen. Besonders vorteilhaft kann es sein, die Sperrschicht schlauchinnenseitig anzubringen, so dass sie nach der Umstülpung den Außenbereich der Umstülpung überzieht und so die Dichtigkeit im Anschlussbereich zu einem angrenzenden Bauteil verbessert.

Vorteilhafterweise wählt man die Flexibilität des flexiblen Schlauchs 1 im Umstülpungsbereich 3 nicht größer als in einem weiterführenden Bereich 7.

Weitere Varianten betreffen den Einsatz von Stabilisierungsmifteln 18, mit denen der Umstülpungsbereich 3 stabilisierbar ist. Hierbei kann das Stabilisierungsmittel 18 im Umstülpungsbereich 3 zumindest abschnittsweise zwischen den Wandungslagen des nicht-umgestülpten Abschnitts 12 und des umgestülpten Abschnitts 11 angeordnet sein, kann sich auch zwischen den Wandungslagen des nicht-umgestülpten Abschnitts 12 und des umgestülpten Abschnitts 11 vom Leitungsende 2 bis zu dem vom Leitungsende 2 entfernten Ende des Krümmungsbereichs 5 erstrecken und so ausgebildet sein, dass in das Stabilisierungsmittel 18 eine axiale gegen das distale Ende 13 des Umstülpungsbereichs 3 gerichtete Andruckkraft einleitbar ist und diese Kraft unmittelbar auf die Wandung des Krümmungsbereiches 5 weitergeleitet und dieser zwischen Stabilisierungsmittel 18 und einem angrenzenden Bauteil eingeklemmt und gegen das angrenzende Bauteil angepresst wird, kann ebenso im Krümmungsbereich 5 ausgebildet sein und diesen aussteifen, kann das Leitungsende 2 an dessen Schnittkante berühren und damit die Schnittkante stabilisieren, und somit die Eignung zum Einleiten einer Andruckkraft, die die Umstülpungsstirnfläche am distalen Ende 13 des Umstülpungsbereichs 3 gegen ein mit dieser in Kontakt befindliches angrenzendes Bauteil zu erhöhen, und/oder kann den nicht zwischen den Wandungslagen des nicht-umgestülpten Abschnitts 12 und des umgestülpten Abschnitts 11 gelegenen Umstülpungsendbereich 6 umgreifen und so ein Aufweiten desselben verhindern. Die jeweilige Ausformung des Stabilisierungsmittels 18 kann damit an die jeweiligen technischen Erfordernisse im konkreten Anwendungsfall angepasst werden.

Vorteilhafterweise kann dieses vorgenannte Stabilisierungsmittel 18 als Hülse ausgeführt sein, die vorzugsweise im Wesentlichen aus einem Metall oder einer Metalllegierung besteht und gegebenenfalls auch eine Vergütung, einen Schutz- oder Haftüberzug oder eine andersartige Oberflächenbehandlung oder -beschichtung aufweisen kann. Auch eine Ausführung aus einem Kunststoff-Grundmaterial oder einem Verbundwerkstoff wäre denkbar. In weiteren Varianten des Stabilisierungsmittels 18 kann dieses Stabilisierungsmittel 18 oder weitere Elemente mit der Leitung kraft-, form- und/oder stoffschlüssig verbunden sein; so kann das Stabilisierungsmittel 18 beispielsweise eine formschlusserhöhende Oberflächenausführung enthalten oder auch eine Verpressung oder Verklebung des Stabilisierungsmittels 18 mit einem Abschnitt der Leitung erfolgen. Ferner sind Varianten der Erfindung möglich, bei denen zur Stabilisierung des Umstülpungsbereichs 3 der umgestülpte Abschnitt 11 mit dem nicht-umgestülpten Abschnitt 12 verschweißt oder verklebt ist.

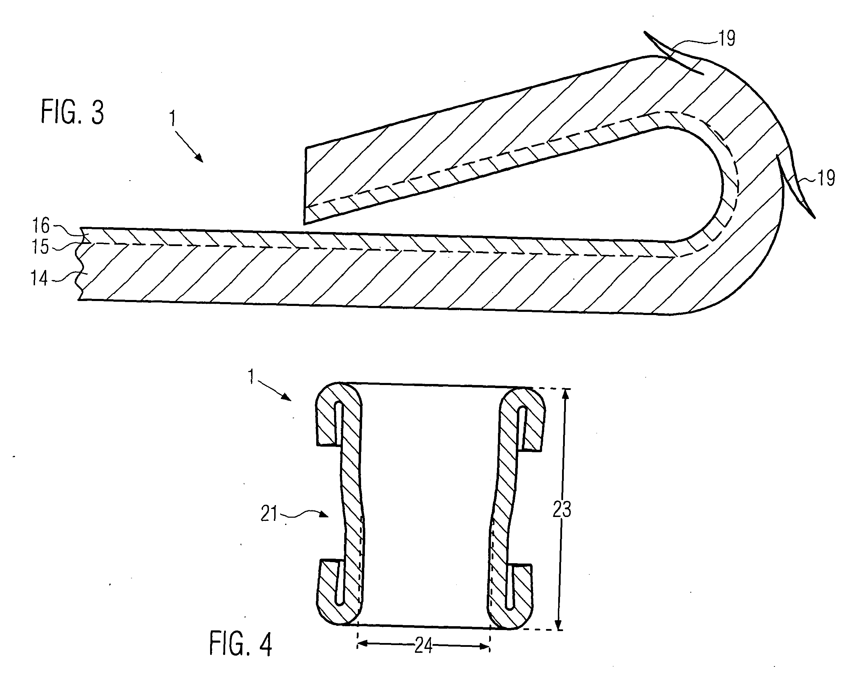

Fig. 3 zeigt eine Leitung, ausgeführt als flexibler mehrlagiger Schlauch, nach einem dritten Ausführungsbeispiel der Erfindung. Dieses dritte Ausführungsbeispiel entspricht in wesentlichen Punkten den ersten beiden Ausführungsbeispielen, so dass Bezugszeichen sowie Aussagen zu diesen ersten beiden Ausführungsbeispielen auch für das dritte Ausführungsbeispiel zutreffen. Um Wiederholungen zu vermeiden, wird deshalb nur auf Unterschiede und Besonderheiten dieses dritten Ausführungsbeispiels eingegangen.

Das in Fig. 3 gezeigte Ausführungsbeispiel zeigt einen Schlauch 1 bestehend aus Außenschicht 16, Armierungsschicht 15 und Innenschicht 14, der ein Dichtmittel aufweist, wobei dieses in der bildlich dargestellten Variante des Ausführungsbeispiels in Form zweier Dichtlippen 19 ausgebildet ist. Vorteilhafterweise werden diese Dichtlippen 19 durch Einschneiden der Leitungswand nach dem Vulkanisieren oder Polymerisieren schräg zu deren Oberflächenverlauf in einer zur Leitungsachse rotationssymmetrischen Linienführung gebildet, wodurch sich eine in einer Transversalebene zu den Schnittlinien durch die Leitungswand konzentrische Lage des Einschnittlinie ergibt. Die Dichtlippe 19 kann auch so angeordnet sein, dass diese sich bei einem hohen Leitungsinnendruck an ein angrenzendes Bauteil anlegt oder anpresst und so die Dichtwirkung erhöht. Alternativ dazu könnten die Dichtlippen 19 auch während des Verfestigungsvorgangs z.B. in einer Vulkanisationsform ausgebildet werden.

In einer anderen Variante kann dieses Dichtmittel im Umstülpungsbereich 3 des Schlauches 1 auch andersgeartete Dichtmittel aufweisen. Hierfür kommen u.a. in Betracht Dichtringe oder Dichtmanschetten, die mit dem Umstülpungsbereich auch stoffschlüssig verbunden sein können, abschnittsweise aufgebrachte Dicht- oder Sperrschichten aus einem für den spezifischen Einsatzzweck geeigneten Kunststoff, Dichtüberzüge, die beispielsweise in einem Tauchverfahren hergestellt sein können, oder beispielsweise hydrophobe oder lipophobe Ausrüstungen oder Überzüge zu Verbesserung von Gleiteigenschaften oder Verringerung von Abrieb.

Fig. 4 zeigt als ein viertes Ausführungsbeispiel einer Leitung 1, wie sie in den vorangegangenen Ausführungsbeispielen gezeigt und beschrieben wurde, bevorzugt einem flexiblen Schlauch, wobei die Leitung bzw. der Schlauch beidendig eine Umstülpung aufweist. Das unter dem ersten bis dritte Ausführungsbeispiel Gesagte gilt deshalb auch für dieses vierte Ausführungsbeispiel. Um Wiederholungen zu vermeiden, wird deshalb nur auf Unterschiede und Besonderheiten dieses dritten Ausführungsbeispiels eingegangen.

Der Adapter 21 weist eine Adapterlänge 23 und einen Leitungsinnendurchmesser 24 auf. Der Leitungsinnendurchmesser 24 wird im Falle nicht zylindermantelförmiger Ausformung der Leitungsinnenwand durch Berechnung desjenigen gemittelten Durchmessers ermittelt, der auf der halben Adapterlänge 23 bestimmbar ist. Das bevorzugte Verhältnis aus Adapterlänge 23 und Leitungsinnendurchmesser 24 sollte dabei typischerweise kleiner als 10:1, bevorzugt kleiner als 3:1 sein. Der Adapter 21 kann wiederum hinsichtlich seiner Ausgestaltung auf die zuvor ausgeführten Ausführungsbeispiele 1 bis 3 zurückgreifen.

Derartige Adapter 21 können vorteilhaft zur Verbindung von Bauteilen bei gleichzeitiger mechanischer, thermischer und/oder elektrischer Entkopplung eingesetzt werden. Insbesondere kann ein derartiger Adapter 21 zur Dämpfung der Schwingungsübertragung von einem Bauteil auf ein anderes Bauteil, als dämpfendes Element zur Aufnahme von Druckspitzen im Druckverlauf der transportierten Medien, zum Ausgleich von Toleranzen und thermischer Spannungen, und/oder zur Anpassung an Durchmesserunterschiede eingesetzt werden. Ein besonderes Einsatzgebiet für einen derartigen Adapter 21 können Verbindungsleitungen von Fördervorrichtungen wie Pumpen und Kompressoren darstellen; ein weiteres besonders bevorzugtes Einsatzgebiet ist im Bereich der Ladeluftzuführung für Kfz-Motoren mit Turboladern oder anderen ansaugluftkomprimierenden Vorrichtungen gegeben.

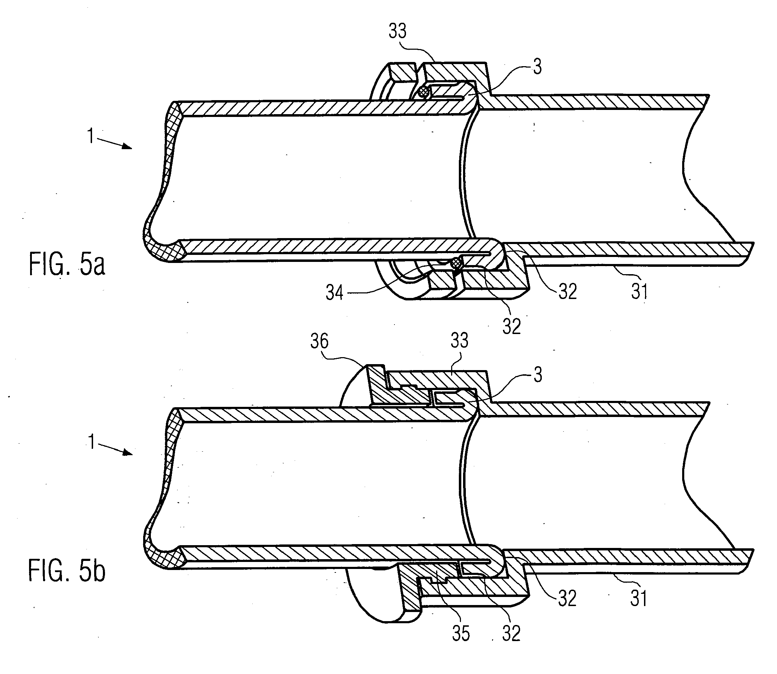

Fig. 5a zeigt eine Anwendung einer Leitung 1 nach dem zweiten Ausführungsbeispiel in Verbindung mit einem Anschlussstück 31 und mit Federdrahtklammer 34. Wie aus der Figur ersichtlich, ist die Leitung 1 mit ihrem Umstülpungsbereich 3 in einen Leitungsaufnahmebereich 33 des Anschlussstückes 31 eingeführt, wobei sich der Umstülpungsbereich 3 an dessen Stirn- und Außenseiten mit korrespondierenden Anlageflächen 32 des Anschlussstücks 31 in Anlage befindet und zu diesen in dichtendem Kontakt steht. Der Leitungsaufnahmebereich 33 des Anschlussstücks weist an einander gegenüberliegen Abschnitten des Wandbereichs segmentale Einschnitte auf, die zur Aufnahme einer Federdrahtklammer 34 geeignet sind, wobei die Federdrahtklammer das Leitungsende 2 des Umstülpungsendbereichs 6 hintergreift und so die Leitung 1 vor Auszug aus dem Leitungsaufnahmebereich 33 des Leitungsanschlussstücks 31 schützt.

Fig. 5b zeigt wiederum eine Anwendung einer Leitung 1 nach dem zweiten Ausführungsbeispiel in Verbindung mit einer anderen Variante eines Anschlussstücks 31, wobei hier für die Aufgabe von Sicherung und Andruck des Umstülpungsbereichs 3 gegen die Anlageflächen 32 des Anschlussstücks 31 statt der Federdrahtklammer 34 ein Bajonettring 35 zum Einsatz kommt, der in den zwischen dem weiterführenden Bereich 7 der Leitung 1 und einem Abschnitt des Wandbereichs des Leitungsaufnahmebereichs 33 ausgebildeten Spalt hineingreift und gegen das Leitungsende 2 des Umstülpungsendbereichs 6 drückt, wodurch ein zuverlässige Anpressung des stirnseitigen Bereichs des Umstülpungsbereichs 3 der Leitung 1 gegen die entsprechende Axialanlagefläche 32 des Anschlussstücks 31 erzielbar ist. Der Bajonettring 35 weist ferner an einem in leitungsaxialer Richtung von der Kontaktfläche zwischen Bajonettring 35 und Umstülpungsbereich 3 abgewandten Bereich einen Kragen 36 auf, der durch einen Durchmessersprung nach außen gekennzeichnet ist und als Greifabschnitt 36 zum Greifen bei Verriegeln und Entriegeln der Bajonettverbindung ausgebildet ist.

Vorteilhafterweise kann das Anschlussstücks 31 auch so gestaltet sein, dass der Innennippel entfällt, wobei eine Lumenverengung im Durchflussquerschnitt zwischen Leitung 1 und Anschlussstück vermieden wird und der abdichtende Kontakt zwischen dem Umstülpungsbereich 3 der Leitung 1 und dem Leitungsanschlussstück 31 im stirnseitigen und/oder außenseitigen Bereich des Umstülpungsbereichs 3 oder in einem gekrümmten Bereich des Umstülpungsbereichs 3 mit einer entsprechenden stirnseitigen Axialanlagefläche bzw. Außenanlagefläche bzw. einer geneigten oder gewölbten Anlagefläche des Anschlussstücks 31 hergestellt wird. In einer besonderen Variante ist die Kontur der Anlageflächen an den Krümmungsbereich 5 des Umstülpungsbereichs 3 abschnittsweise so angepasst und eine korrespondierende Negativform zum Krümmungsbereich 5 geschaffen, dass ein nahezu fugenloser Anschluss der Lumina von Leitung 1 und Anschlussstück 31 ermöglicht wird. Auch ist eine beliebige Kombination von Anlageflächen innerhalb des Anschlussstücks 31 in einer Ausführungsform denkbar, solange ein Kontakt zwischen einem Bereich des Umstülpungsbereichs 3 und dem Anschlussstück 31 hergestellt wird.

Um die Leitung 1 im Anschlussstück 31 zu fixieren, sind unterschiedliche, in der Technik bekannte Varianten denkbar, durch die zwischen Anlageflächen 32 und einem Bereich des Umstülpungsbereichs 3 eine kraft- und/oder formschlüssige Verbindung erfolgt. Hierfür kommen u.a. Pressverbindungen und/oder Verzahnungsprofile oder andere Vorformgebungen der Anlageflächen in Betracht.

In einer besonders vorteilhaften Bauform des Anschlussstücks 31 weist dieses ein Haltemittel auf, das den Umstülpungsendbereich 6 hintergreift. Hierfür kommen insbesondere in Betracht: Sprengringe, Federdrahtklammern 34, Schraub-, Rast-, Klebe- oder Bajonettringe 35 oder entsprechende Schraub-, Rast-, Klebe- oder Bajonetthülsen, segmentierte Haltevorrichtungen, die um den weiterführenden Bereich 7 der Leitung 1 nachträglich herumgelegt werden können, Halteklammem, die zwischen dem Leitungsaufnahmebereich 33 des Anschlussstücks 31 und dem weiterführenden Bereich 7 der Leitung 1 eingeführt werden können, ferner Klemm- oder Fixierschrauben oder Nieten, im Leitungsaufnahmebereich 33 des Anschlussstücks 31 drehbar gelagerte oder anders bewegliche Haltebügel oder beweglich gelagerte Federbügel, mit dem Leitungsaufnahmebereich 33 des Anschlussstücks 31 beweglich verbundene Halteklauen, Rastnasen oder Rastringe, Federlaschen oder pressbare Bereiche, die beispielsweise als Presshülsen oder Presslaschen ausgeführt sein können.

Viele der vorgenannten Haltemittel können so ausgeführt werden, dass diese Haltemittel zusätzlich eine Andruckfunktion ausüben und die Leitung 1 axial in Leitungseinschubrichtung gegen eine Anlagefläche 32 des Anschlussstücks 31 drücken. Je nach

Ausgestaltung des Haltemittels ist dabei eine schnell lösbare, eine handlösbare, eine Ständardwerkzeug-lösbare, eine nur mit Spezialwerkzeug lösbare oder eine unlösbare Verbindung erzielbar. Für die Ausbildung einer unlösbaren Verbindung kann auch eine stoffschlüssige Verbindung zwischen Anschlussstück 31 und Leitung 1, insbesondere durch Verkleben oder Verschweißen eingesetzt werden.

Als Material für das Leitungsanschlussstücks 31 kommen je nach Einsatzbereich insbesondere Metalle und Metalllegierungen, Kunststoffwerkstoffe und Verbundwerkstoffe, insbesondere Faserverbundwerkstoffe, aber auch keramische, Glas- oder Sinterwerkstoffe in Betracht. Für manche Anwendungsfälle kann es zweckmäßig sein, das Anschlussstück 31 aus einem artverwandten oder demselben Kunststoff herzustellen wie die Leitung selbst. Auch könnte der Leitungsaufnahmebereich 33 des Anschlussstücks 31 aus einem schrumpfbaren Kunststoffabschnitt hergestellt sein, wodurch sich eine formschlüssige Verbindung zwischen Umstülpungsbereich und Leitungsaufnahmebereich ergeben würde. Zusätzlich könnte der Leitungsaufnahmebereich auch noch einen aufschmelzbaren Klebstoff enthalten, der eine stoffschlüssige Verbindung im Umstülpungsbereich eingeht.

## Patentansprüche

1. Leitung, vorzugsweise flexibler Schlauch, **dadurch gekennzeichnet, dass** die Leitung (1) in einem Endbereich zumindest abschnittsweise eine Umstülpung aufweist, so dass die ursprüngliche Leitungsaußenwand (9) des nicht-umgestülpten Abschnitts (12) und des umgestülpten Abschnitts (11) einander zugewandt sind.

2. Leitung nach Anspruch 1, **dadurch gekennzeichnet, dass** ein Abschnitt der Umstülpung die Leitung (1) an einem nicht-umgestülpten Abschnitt (12) berührt.

3. Leitung nach zumindest einem der vorangegangenen Ansprüche, **dadurch gekennzeichnet, dass** nach dem Umstülpen ein umgestülpter Abschnitt (11) nur in einem das Leitungsende (2) umfassenden Abschnitt den nicht-umgestülpten Abschnitt (12) der Leitung (1) berührt.

4. Leitung nach zumindest einem der vorangegangenen Ansprüche, **dadurch gekennzeichnet, dass** die Umstülpung so vorgenommen wurde, dass ein leitungsendseitiger Abschnitt eines umgestülpten Abschnitts (11) in einem geraden Abschnitt (4) endet.

5. Leitung nach zumindest einem der vorangegangenen Ansprüche, **dadurch gekennzeichnet, dass** der gerade Abschnitt (4) ein Parallelabschnitt ist, der **dadurch gekennzeichnet ist, dass** die jeweiligen Wandungslagen eines nicht-umgestülpten Abschnitts (12) und eines umgestülpten Abschnitts (11) in diesem Bereich in etwa parallel zueinander angeordnet sind.

6. Leitung nach zumindest einem der vorangegangenen Ansprüche, **dadurch gekennzeichnet, dass** der umgestülpte Abschnitt (11) den nicht-umgestülpten Abschnitt (12) nicht berührt.

7. Leitung nach zumindest einem der vorangegangenen Ansprüche, **dadurch gekennzeichnet, dass** eine mehrfache Umstülpung erfolgt und mehr als zwei Wandungslagen im Umstülpungsbereich (3) aneinander grenzen.

8. Leitung nach zumindest einem der vorangegangenen Ansprüche, **dadurch gekennzeichnet, dass** die Umstülpung durch Einrollen des Leitungsendes (2) erfolgt und die Wandungslagen im Umstülpungsbereich (3) im Querschnitt in etwa schneckenförmig angeordnet sind.

9. Leitung nach zumindest einem der vorangegangenen Ansprüche, **dadurch gekennzeichnet, dass** im Umstülpungsbereich (3) wenigstens ein Stabilisierungsmittel (18) vorhanden ist, mit dem die Umstülpung stabilisierbar ist.

10. Leitung nach zumindest einem der vorangegangenen Ansprüche, **dadurch gekennzeichnet, dass** die Leitung (1) ein flexibler Schlauch ist und zumindest ein Elastomer, ein thermoplastisches Elastomer oder einen Thermoplasten enthält.

11. Leitung nach Anspruch 10, **dadurch gekennzeichnet, dass** der flexible Schlauch ein mehrlagiger Gewebeschlauch ist, bestehend mindestens aus einer Innenschicht (14), einer Armierungsschicht (15) und einer Außenschicht (16), wobei Innen- (14) und/oder Außenschicht (16) ein Elastomer oder ein thermoplastisches Elastomer oder einen Thermoplasten enthalten.

12. Leitung nach zumindest einem der vorangegangenen Ansprüche, **dadurch gekennzeichnet, dass** der flexible Schlauch eine Sperrschicht (17) enthält.

13. Leitung nach zumindest einem der vorangegangenen Ansprüche, **dadurch gekennzeichnet, dass** die Sperrschicht (17) auf der Schlauchinnenseite angebracht ist.

14. Leitung nach zumindest einem der vorangegangenen Ansprüche, **dadurch gekennzeichnet, dass** die Sperrschicht (17) ein Kautschukcopolymer oder einen halogen enthaltenden Kautschuk, bevorzugt Fluorkautschuk, enthält.

15. Leitung nach zumindest einem der vorangegangenen Ansprüche, **dadurch gekennzeichnet, dass** im Umstülpungsbereich (3) einen Dichtbereich ausbildet ist, der ein Dichtmittel enthält.

16. Leitung nach Anspruch 15, **dadurch gekennzeichnet, dass** das Dichtmittel eine Dichtlippe (19) darstellt, die bevorzugt durch Einschneiden der Leitungswand gebildet wird.

17. Leitung nach zumindest einem der vorangegangenen Ansprüche, **dadurch gekennzeichnet, dass** das bevorzugte Verhältnis der Länge des Umstülpungsbereiches (3) zur Wandstärke (8) der Leitung (1) zwischen 2,5:1 und 20:1 liegt.

18. Leitung, bevorzugt flexibler Schlauch, nach zumindest einem der vorangegangenen Ansprüche, **dadurch gekennzeichnet, dass** die Leitung (1) beidendig eine Umstülpung aufweist.

19. Leitung nach Anspruch 18, **dadurch gekennzeichnet, dass** das Verhältnis aus Adapterlänge (23) und Leitungsinnendurchmesser (24) typischerweise kleiner 10:1, bevorzugt kleiner 3:1 ist.

20. Leitung nach Anspruch 18 oder 19, **dadurch gekennzeichnet, dass** der Durchmesser der Leitung (1) an einem Endbereich der Leitung (1) größer ist als an dem anderen Endbereich der Leitung (1).

21. Leitung mit Anschlussstück (31), **dadurch gekennzeichnet, dass** die Leitung (1) nach zumindest einem der vorangegangenen Ansprüche gefertigt ist und diese Leitung (1) mit dem Anschlussstück (31) verbunden ist und ein abdichtenden Kontakt mit einer Anlagefläche (32) des Anschlussstücks (**31**) ausbildet.

22. Leitung mit Anschlussstück (31) nach Anspruch 21, **dadurch gekennzeichnet, dass** der Umstülpungsbereiches (3) mit einer korrespondierenden Innenanlagefläche und/oder stirnseitigen Anlagefläche, und/oder Außenanlagefläche und/oder einer geneigten Anlagefläche und/oder gewölbten Anlagefläche des Anschlussstücks (31) in Anlage bringbar ist.

23. Leitung mit Anschlussstück (31) nach zumindest einem der Ansprüche 21 oder 22, **dadurch gekennzeichnet, dass** die Abdichtung zwischen dem Anschlussstück (31) und der Leitung (1) zumindest im stirnseitigen und/oder außenseitigen und/oder einem dazwischenliegenden Bereich des Umstülpungsbereichs (3) ausgebildet wird.

24. Leitung mit Anschlussstück (31) nach zumindest einem der Ansprüche 21 bis 23, **dadurch gekennzeichnet, dass** die Verbindung zwischen Umstülpungsbereich (3) und Anschlussstück kraftschlüssig und/oder formschlüssig erfolgt.

25. Leitung mit Anschlussstück (31) nach zumindest einem der Ansprüche 21 bis 24, **dadurch gekennzeichnet, dass** das Anschlussstück (**31**) ein Haltemittel aufweist, das den Umstülpungsendbereich (6) hintergreift.

26. Leitung mit Anschlussstück (31) und Haltemittel nach Anspruch 25, **dadurch gekennzeichnet, dass** das Haltemittel zusätzlich eine Andruckfunktion ausübt und die Leitung (1) axial in Einschubrichtung gegen eine Anlagefläche (32) des Anschlussstücks (31) drückt.

27. Leitung mit Anschlussstück (**31**) nach zumindest einem der Ansprüche 21 bis 26, **dadurch gekennzeichnet, dass** eine stoffschlüssige Verbindung zwischen Anschlussstück (31) und Leitung (1), insbesondere durch Verkleben oder Verschweißen, ausgebildet ist.
